# EUROPEAN PATENT APPLICATION

(11) **EP 4 696 488 A1**
(43) Date of publication of application: **18.02.2026**
(21) Application number: 24306354.2
(22) Date of filing: 13.08.2024
(51) Int. Cl.: B29D 11/00

(54) **A METHOD FOR AUTOMATICALLY DEFINING A GLUING PATTERN FOR GLUING TWO OPTICAL COMPONENTS**

(71) Applicant: Essilor International, 94220 Charenton-Le-Pont (FR)
(72) Inventor: MEYNEN, Mathieu, 94340 Joinvillele-Pont (FR); TRIDON, Jean-Marc, 21560 Couternon (FR); MONVOISIN, Antoine, 21110 Beire le Fort (FR)
(74) Representative: Ipsilon

(57) **Abstract**

This method for automatically defining a gluing pattern for gluing a first optical component on a second optical component, said first optical component having a peripheral edge, a predetermined shape and a predetermined curvature, comprises a calculation step (10) taking account of the shape, the curvature and at least one glue dispensing parameter to deduce the gluing pattern, so that glue used for the gluing, applied on the shape at each point of the gluing pattern, reaches the peripheral edge at the same time.

## Description

### FIELD OF THE INVENTION

The present invention relates to a method for automatically defining a gluing pattern for gluing two optical components.

### BACKGROUND OF THE INVENTION

Augmented reality and virtual reality systems are very complex products. Most of the time, they include an active component, such as a light-guide optical element, or an electrochromic cell. The active component has to be encapsulated e.g. in a transparent capsule, in order to be protected and/or in order to ensure that the augmented reality or virtual reality image is displayed at the right position with respect to the wearer's eyes. Encapsulation may also be necessary in order to enable the addition, to the augmented or virtual reality system, of an ophthalmic lens with the wearer's prescription.

An example of a method for encapsulating a light-guide optical element in a transparent capsule is described in document WO 2015/059215 A1.

Encapsulation may be realized by gluing a wafer on the active component.

In order to glue the wafer on the active component or, more generally, to glue a first optical component on a second optical component by means of liquid glue, it is necessary to dispense glue according to a given pattern.

In the state of the art, the gluing pattern is defined experimentally. The target is to avoid lack of glue and glue overspreading.

A drawback of experimental techniques is that each time the shape of the optical component on which glue is applied changes, the gluing pattern must be adapted in order to reach the target. This is time consuming.

### SUMMARY OF THE INVENTION

An object of the present disclosure is to overcome the above-mentioned drawbacks of the prior art.

To that end, the present disclosure provides a method for automatically defining a gluing pattern for gluing a first optical component on a second optical component, the first optical component having a peripheral edge, a predetermined shape and a predetermined curvature, the method being remarkable in that it comprises:
a calculation step taking account of the above-mentioned shape, the above-mentioned curvature and at least one glue dispensing parameter to deduce the gluing pattern,
so that glue used for the gluing, applied on the above-mentioned shape at each point of the gluing pattern, reaches the above-mentioned peripheral edge at the same time.

Thus, due to the automatic aspect of the process of defining the gluing pattern, the proposed method makes it possible to gain a significant amount of time and to increase the gluing performance.

In an embodiment, the calculation step comprises:
determining the height of each point of the peripheral edge of the first optical component by projecting a bidimensional geometric surface on a sphere;
determining a law according to which the glue will spread on the shape, as a function of the height and of the time for the glue to reach the peripheral edge;
applying a correction factor to the height according to the determined law, so as to obtain a corrected height of each point of the peripheral edge of the first optical component;
defining a two-dimensional gluing pattern as a function of the corrected height and of a diameter of a glue dispensing aperture of a gluing device;
defining a three-dimensional gluing pattern as a function of the two-dimensional gluing pattern, by projecting the two-dimensional gluing pattern on the surface of the shape.

In an embodiment, the method further comprises determining a glue dispensing trajectory as a function of the three-dimensional gluing pattern and of at least one glue dispensing parameter.

In an embodiment, the at least one glue dispensing parameter is a volume of glue or a number of drops of glue to be used.

In an embodiment, the at least one glue dispensing parameter is a spreading speed of glue.

In an embodiment, the first optical component is an ophthalmic lens and the second optical component is a light-guide optical element.

In an embodiment, the first and second optical components are parts of an augmented reality device.

In an embodiment, the first and second optical components are parts of a virtual reality device.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG. 1 is a flow diagram showing steps of a method according to the present disclosure, in a particular embodiment.
FIG. 2 is a flow diagram showing details of the calculation step of the method according to the present disclosure, in a particular embodiment.
FIG. 3 is a non-limiting example of a gluing pattern defined by a method according to the present disclosure.

### DETAILED DESCRIPTION OF EMBODIMENTS

In the description which follows, the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements, but is not limited to possessing only those one or more steps or elements.

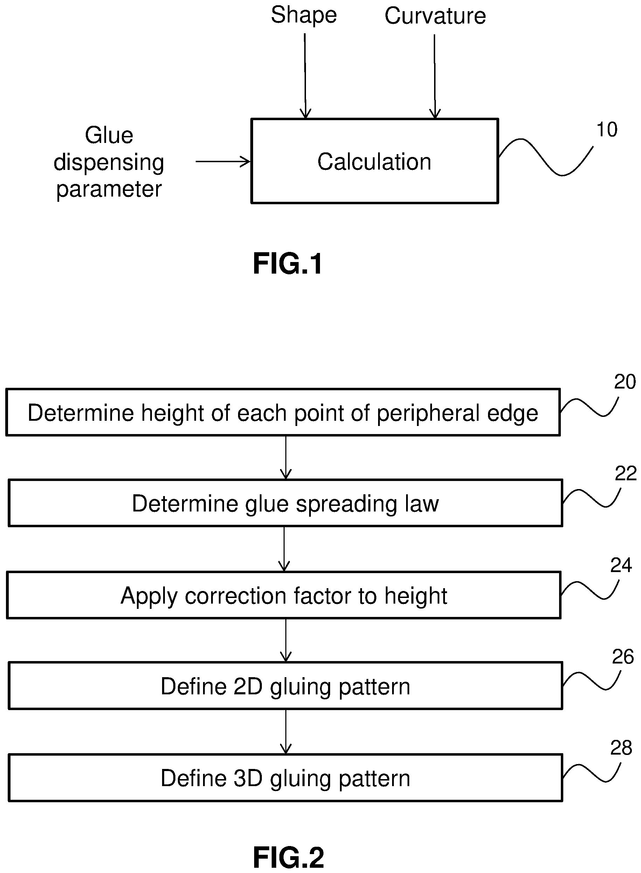

The flow diagram of Figure 1 shows steps of a method according to the present disclosure, for automatically defining a gluing pattern for gluing a first optical component on a second optical component.

By way of non-limiting example, the first optical component may be an ophthalmic lens and the second optical component may be a light-guide optical element.

The first optical component has a peripheral edge, which defines the external contour of the first optical component. The first optical component also has a predetermined shape and a predetermined curvature.

According to the present disclosure and as shown in Figure 1, the method for automatically defining a gluing pattern for gluing the first optical component on the second optical component comprises a calculation step 10.

The calculation step 10 takes account of the shape and of the curvature of the first optical component and also takes account of at least one glue dispensing parameter to deduce the gluing pattern, which is a pattern consisting of a plurality of points where glue is to be deposited.

Thanks to gluing pattern defined at step 10, glue used for the gluing of the first optical component on the second optical component, applied on the shape of the first optical component at each point of the gluing pattern, reaches the peripheral edge of the first optical component at the same time.

The flow diagram of Figure 2 shows a particular embodiment of the calculation step 10 in more details.

A first sub-step 20 consists of determining the height of each point of the peripheral edge of the first optical component by projecting a bidimensional geometric surface, such as a rectangle, on a sphere.

Then, a sub-step 22 consists of determining a law according to which the glue will spread on the shape of the first optical component, as a function of the height of each point of the peripheral edge of the first optical component and as a function of the time for the glue to reach the peripheral edge.

Next, a sub-set 24 consists of applying a correction factor to the height of each point of the peripheral edge of the first optical component according to the glue spreading law determined at sub-step 22, so as to obtain a corrected height of each point of the peripheral edge of the first optical component.

Then, a sub-step 26 consists of defining a two-dimensional gluing pattern as a function of the corrected height and as a function of the diameter of the glue dispensing aperture of the gluing device used for gluing the first optical component on the second optical component. For example, the gluing device may be a glue dispensing needle having a predetermined diameter.

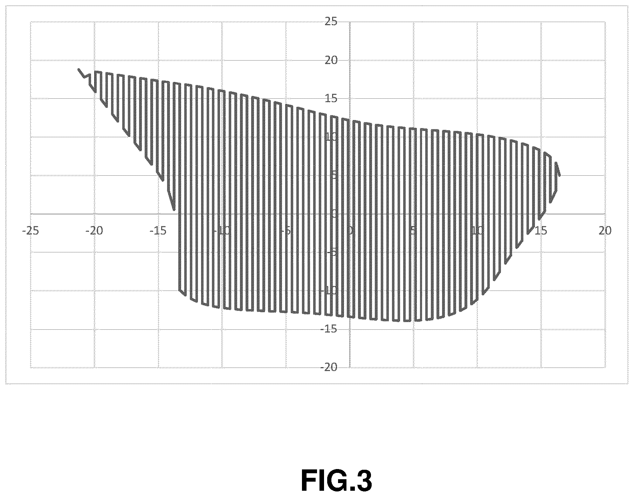

Figure 3 shows a non-limiting example of a two-dimensional gluing pattern. It can be seen that it is a crenellated shape.

The following sub-step 28 consists of defining a three-dimensional gluing pattern as a function of the two-dimensional gluing pattern, by projecting the two-dimensional gluing pattern on the surface of the shape of the first optical component.

Optionally, the method according to the present disclosure may comprise an additional step of determining a glue dispensing trajectory, as a function of the three-dimensional gluing pattern defined at sub-step 28 and as a function of at least one glue dispensing parameter.

The considered glue dispensing parameter may be the volume of glue to be used, or the number of drops of glue to be used.

Alternatively or in addition, the considered glue dispensing parameter may be the spreading speed of the glue.

In an embodiment, the first and second optical components are parts of an augmented reality device. The augmented reality device may be a display system arranged to display information over the real world view. For example, the display system is arranged to display computer generated information over the real world view. With such an augmented reality device, the viewer's image of the world is augmented with overlaying information.

In an embodiment, the first and second optical components are parts of a virtual reality device. The virtual reality device may be a display system arranged to display computer generated information instead of the real world view. With such a virtual reality device, the viewer may experience viewing a virtual environment for recreational, training or simulation purposes.

Although representative methods have been described in detail herein, those skilled in the art will recognize that various substitutions and modifications may be made without departing from the scope of what is described and defined by the appended claims.

## Claims

1. A method for automatically defining a gluing pattern for gluing a first optical component on a second optical component, said first optical component having a peripheral edge, a predetermined shape and a predetermined curvature, said method being **characterized in that** it comprises:
a calculation step (10) taking account of said shape, said curvature and at least one glue dispensing parameter to deduce said gluing pattern,
so that glue used for said gluing, applied on said shape at each point of said gluing pattern, reaches said peripheral edge at the same time.

2. The method according to claim 1, **characterized in that** said calculation step (10) comprises:
determining (20) the height of each point of the peripheral edge of said first optical component by projecting a bidimensional geometric surface on a sphere;
determining (22) a law according to which said glue will spread on said shape, as a function of said height and of the time for said glue to reach said peripheral edge;
applying (24) a correction factor to said height according to said law, so as to obtain a corrected height of each point of the peripheral edge of said first optical component;
defining (26) a two-dimensional gluing pattern as a function of said corrected height and of a diameter of a glue dispensing aperture of a gluing device;
defining (28) a three-dimensional gluing pattern as a function of said two-dimensional gluing pattern, by projecting said two-dimensional gluing pattern on the surface of said shape.

3. The method according to claim 2, **characterized in that** it further comprises determining a glue dispensing trajectory as a function of said three-dimensional gluing pattern and of at least one glue dispensing parameter.

4. The method according to claim 3, **characterized in that** said at least one glue dispensing parameter is a volume of glue or a number of drops of glue to be used.

5. The method according to claim 3 or 4, **characterized in that** said at least one glue dispensing parameter is a spreading speed of glue.

6. The method according to any of the preceding claims, **characterized in that** said first optical component is an ophthalmic lens and said second optical component is a light-guide optical element.

7. The method according to any of the preceding claims, **characterized in that** said first and second optical components are parts of an augmented reality device.

8. The method according to any of the preceding claims, **characterized in that** said first and second optical components are parts of a virtual reality device.
